# EUROPEAN PATENT SPECIFICATION

(11) **EP 4 073 794 B1**
(45) Date of publication and mention of the grant of the patent: **24.07.2024**
(21) Application number: 22707349.1
(22) Date of filing: 03.02.2022
(51) Int. Cl.: G11B 7/0045, G03F 7/00, G06K 19/00, G11B 7/243, G11B 7/253, G11B 11/03, G11B 7/24047

(54) **ULTRA-THIN DATA CARRIER AND METHOD OF READ-OUT**
ULTRADÜNNER DATENTRÄGER
SUPPORT DE DONNÉES ULTRAMINCE

(30) Priority: 12.02.2021 EP 21156858; 26.11.2021 EP 21210819
(43) Date of publication of application: 19.10.2022
(73) Proprietor: Ceramic Data Solutions GmbH, 4810 Gmunden (AT)
(72) Inventor: KUNZE, Martin, 4810 Gmunden (AT); PFLAUM, Christian, 82347 Bernried (DE)
(74) Representative: Vossius & Partner Patentanwälte Rechtsanwälte mbB
(86) International application number: PCT/EP2022/052628
(87) International publication number: WO 2022/171522

(56) References cited:
- JP-A- H02 215 587
- JP-A- H02 277 689
- US-A- 4 214 249
- US-A- 4 797 316
- US-A- 6 120 907
- US-A1- 2006 120 262
- US-A1- 2008 320 205
- US-A1- 2010 068 444
- US-A1- 2010 151 391
- US-A1- 2011 318 695
- US-A1- 2015 302 926
- US-A1- 2016 118 077
- US-A1- 2016 199 935
- WATANABE M ET AL: "THREE-DIMENSIONAL OPTICAL DATA STORAGE IN VITREOUS SILICA", JAPANESE JOURNAL OF APPLIED PHYSICS, JAPAN SOCIETY OF APPLIED PHYSICS, JP, vol. 37, no. 12 B, PART 02, 15 December 1998 (1998-12-15), pages L1527 - L1530, XP000928644, ISSN: 0021-4922, DOI: 10.1143/JJAP.37.L1527

## Description

The present invention relates to a method of manufacturing an ultra-thin data carrier.

It is estimated that, on average, humans generate about 2.5 quintillion bytes per day. While a large portion of said data may be generated for short-term use only, the demand for long-term data storage is increasing on a day by day basis. Apparently, state of the art data carriers such as flash, hard disc drives (HDD) and magnetic tape are far from ideal in terms of long-term storage. Thus, companies like Microsoft are currently exploring alternative techniques for alternative storage technologies (see, for example, the so-called "Project Silica" and US 10,719,239 B2).

A different technique for long-term storage of information has been described in WO 2021/028035 A1. Said technique is based on the use of a ceramic substrate coated with a layer of a different material and encoding information on said coated substrate by using, e.g., a laser in order to manipulate localized areas of said coated substrate. This technique has proven to allow for information storage which is highly resistant to moisture, electromagnetic fields, acidic and corrosive substances, etc. such that the encoded writable ceramic plate provides a durability which is unavailable from other commonly used information storage mediums. One potential disadvantage of said technique, though, is the use of rather voluminous ceramic plates having a thickness of about 1 mm. Accordingly, the data storage density per volume may not achieve data storage densities of currently used data carriers. Accordingly, there is a need for further improvement of data carriers suitable for long-term use and storage.

A variety of data carriers are disclosed in US 2010/0151391 A1,US 6,120,907 B1, US 2008/0320205 A1, US 4,214,249 B1, US 2010/0068444 A1 and US 2016/0118077 A1. The documents US6,120,907B1, US2008/0320205A1, US4,214,249B1 and US2010/0068444A1 disclose methods of manufacturing a data carrier that comprise the steps of providing a ceramic substrate, coating a first surface of the substrate with a first coating by chemical vapor deposition or physical vapor deposition and generating a plurality of recesses encoding information in the first coating by means of laser ablation.

The inventors of the present invention have now, surprisingly, realized that the techniques described in WO 2021/028035 A1 may be analogously employed on thin films of glass ceramic, ceramic or glass material.

The present invention relates to a method of manufacturing a data carrier according to claim 1.

The present disclosure, according to a first aspect not covered by the claimed invention, also relates to a data carrier comprising a ceramic (glass ceramic or glass) substrate having first and second opposite surfaces and a thickness of at most 500 µm, preferably of at most 200 µm, more preferably of at most 150 µm, wherein the first surface of the substrate comprises a plurality of laser-ablated recesses encoding information, wherein each recess preferably has a depth of at most 1 µm. While said ceramic films, due to their thickness, may be mechanically less stable as they may, e.g., break during excessive kinking, their resistance to moisture, electromagnetic fields and acidic or corrosive substances is as high as that of the ceramic substrates described in WO 2021/028035 A1. At the same time, reducing the thickness of the data carrier by at least a factor of 2 (preferably 5, more preferably 6) automatically increases the data storage density per volume by the same factor.

The information encoded by means of the plurality of recesses may be analog and/or digital information. For example, the plurality of recesses may, in conjunction, form an analogue image, text, numbers or the like. Alternatively, the plurality of recesses may encode digital information similar to, for example, digital information encoded on a CD, DVD Blu-ray Disc or a data matrix code. In any case, the encoded information can preferably be decoded optically, either visually by the naked eye or with the help of suitable optics such as a microscope or the like or by means of an optical decoder.

Different from the information storage medium according to WO 2021/028035 A1, the data carrier according to the first aspect of the present disclosure does not require an additional coating. Since the ceramic films used for the data carrier of the present disclosure are sufficiently flexible to be wound up on a roll, it may, under certain premises, be challenging to coat said ceramic film and to maintain said coating after data encoding and bending of the substrate. Accordingly, it is the substrate of the data carrier according to the first aspect that comprises the plurality of recesses encoding the information. These recesses are generated by means of a laser beam and may have various shapes and/or depths as described in great detail in WO 2022/002418 A1, which document is fully incorporated herein by reference, in particular with regard to any disclosure therein explaining in detail how to encode information by means of recess depth. In its most simple form of this first aspect, each recess has about the same depth and the optical decoder detects the difference between a substrate area without recess and a recess by measuring, for example, a phase difference or detecting changes in the reflectivity (if, for example, the substrate surface is polished and the bottom of the recess is curved or roughened). In order to minimally distort the thin ceramic film material it is preferred that the recesses have a depth as small as possible, for example a depth of at most 100 nm, preferably of at most 50 nm and even more preferably of at most 30 nm. It is also preferred that the depth of each recess is smaller than 1%, preferably smaller than 0.1%, more preferably smaller than 0.05% of the thickness of the substrate.

In order to create well-defined recesses which may be easily detected it preferred that the recesses are generated by means of laser ablation utilizing a picosecond or a femtosecond pulse laser. Indeed, using such pulse lasers leads to cylindrical recesses without any molten material edges at the top circumference of each recess.

In order to further increase the data storage density it is preferred that the second surface of the substrate also comprises a plurality of laser-ablated recesses encoding information, each recess having a depth of at most 1 µm and properties similar to those discussed above. Since the thickness of the substrate is at least two orders of magnitude greater than the depth of each recess one may distinguish, using well known techniques, whether light has been reflected on the first surface, at the bottom of a recess of the first surface or at the opposing second surface.

According to a second aspect not covered by the claimed invention, the present disclosure relates to a data carrier comprising a ceramic substrate having first and second opposite surfaces and a thickness of at most 500 µm, preferably of at most 200 µm, more preferably of at most 150 µm, wherein the first surface of the substrate is coated with a first coating, the material of the first coating being different from the material of the ceramic substrate, wherein the first coating comprises a plurality of laser-ablated recesses encoding information. In comparison to the first aspect of the present disclosure discussed above, the additional coating provides the benefit of allowing for more complex optical effects, which are outlined in detail in WO 2021/028035 A1, the entire contend of which is hereby incorporated by reference. For example, the material of the first coating may have different optical properties compared to the optical properties of the ceramic substrate. For example, if the material of the ceramic substrate exhibits a bright or white color, whereas the material of the first coating exhibits a dark or black color, ablating the material of the first coating so as to create recesses which extend all the way towards or even into the ceramic substrate will create a strong optical contrast between the overall surface of the first coating on the one hand and each of the recesses on the other hand. This contrast may be visible (e.g., for the naked eye) generating the impression of an image, text or the like or may provide a digital encoding (recess versus no recess) which may be easily and reliably decoded by an optical decoder.

However, in view of the envisaged long-term use of the data carrier manufactured by the present invention, one has to ascertain that the first coating remains reliably attached to the ceramic substrate, preferably even if the substrate is bent or wound up on a roll. Therefore, it is preferable to apply a rather thin coating layer having a thickness of at most 10 µm, preferably at most 1 µm, more preferably at most 200 nm, even more preferably at most 150 nm, even more preferably at most 100 nm, even more preferably at most 50 nm, even more preferably at most 30 nm and most preferably at most 20 nm. In terms of the optical effect to be achieved, e.g. by means of an optical contrast, it is sufficient to provide for a thickness which allows for substantial absorption, multiscattering, reflection, or the like.

In view of ease of the coating process and, in particular, the decoding process it is preferred that the average roughness Ra of both the substrate surface and the coating surface is smaller than 10 nm, preferably smaller than 5 nm, more preferably smaller than 3 nm. Ra is the arithmetic average value of a filtered roughness profile determined from deviations about the center line along the evaluation length.

Since the first coating on the ceramic substrate may create strain in the data carrier, it may be beneficial to coat both surfaces of the ceramic substrate in order to achieve a symmetric strain. It is therefore preferred that the second surface of the substrate is coated with a second coating, the material of the second coating being different from the material of the ceramic substrate (and preferably identical to the material of the first coating). Of course, if a second coating is provided, said second coating may also be used to encode additional information, thus doubling the amount of data to be stored on the data carrier. Accordingly, it is preferred that the second coating also comprises a plurality of laser-ablated recesses encoding information.

In order to ensure a strong bond between the first and second coating and the ceramic substrate, the data carrier is tempered after the coating process. Such tempering achieves a sintered interface between the substrate and the first coating and/or between the substrate and the second coating, which sintered interface enhances the bond between substrate and coating(s). Preferably, the sintered interface comprises at least one element from the substrate and at least one element from the respective coating.

As mentioned above, the data carrier according to the second aspect allows for providing an optical contrast or another difference in an optical property between areas of unperturbed coating and areas with a recess. For this purpose, it is preferred that each recess in the first and/or second coating has a depth which is equal to or greater than the thickness of the respective coating. In other words, it is preferred that the coating material is substantially completely ablated (or evaporated or otherwise removed) at each recess in order to make the material of the ceramic substrate accessible for optical decoding (by, e.g., the naked eye, a microscope, a camera or a more sophisticated optical decoder). In this context, it would be ideal to exactly remove all coating material at a recess position without affecting the ceramic substrate. Yet, this may be difficult to reliably and reproducibly control. Accordingly, it may be preferable to control the laser system used for ablation such that each recess in a first and/or second coating has a depth which is slightly greater than the thickness of the respective coating. For example, the ratio between the depth of each recess and the thickness of the respective coating may be in a range between 1.01 and 1.2, preferably between 1.01 and 1.1, more preferably between 1.02 and 1.05. Preferably, each recess extends into the ceramic substrate with a depth of at most 1 µm, preferably of at most 100 nm, more preferably of at most 50 nm, even more preferably of at most 30 nm, even more preferably of at most 20 nm and most preferably of at most 10 nm.

It may also be preferable that each recess in the first and/or second coating has a depth which is smaller than the thickness of the respective coating. For example, the depth of each recess may be optimized such that the recess never touches the ceramic substrate, while at the same time the bottom material below the recess of the respective coating is sufficiently thin that laser light of a specific wavelength may still, at least partly, transmit through said coating material and reach the material of the ceramic substrate in order to achieve the optical contrast discussed above. For this purpose, it is preferred that the ratio between the depth of each recess and the thickness of the respective coating is in a range between 0.9 and 0.99, preferably between 0.95 and 0.99, more preferably in a range between 0.97 and 0.99. Alternatively, each recess in the first and/or second coating may have a depth which is substantially smaller than the thickness of the respective coating. In this case, the recesses may be utilized in a way similar to the first aspect of the present disclosure discussed above. In other words, the ceramic substrate in this case merely serves as a carrier substrate with the encoding and decoding taking place entirely with respect to the coating material only.

Preferably, the first and/or second coating comprises one or a combination of the following materials: Cr, Co, Ni, Fe, Al, Ti, Si, W, Zr, Ta, Th, Nb, Mn, Mg, Hf, Mo, V; a metal nitride such as CrN, CrAIN, TiN, TiCN, TiAIN, ZrN, AIN, VN, Si₃N₄, ThN, HfN, BN; a metal carbide such as TiC, CrC, Al₄C₃, VC, ZrC, HfC, ThC, B₄C, SiC; a metal oxide such as Al₂O₃, TiOz, SiOz, ZrOz, ThOz, MgO, Cr₂O₃, Zr₂O₃, V₂O₃; a metal boride such as TiB₂, ZrB₂, CrB₂, VB₂, SiB₆, ThB₂, HfB₂, WB₂, WB₄; or a metal silicide such as TiSi₂, ZrSi₂, MoSiz, MoSi, WSi₂, PtSi_{,}, Mg₂Si.

Of course, all features discussed above with regard to the first aspect, which may also be employed in the context of the second aspect, should be considered to be disclosed for the second aspect as well. Moreover, all features discussed further below apply equally to both aspects of the present disclosure.

Preferably, the ceramic substrate comprises one or a combination of the following materials: silicon oxide, aluminum oxide, boron oxide, sodium oxide, potassium oxide, lithium oxide, zinc oxide, magnesium oxide.

Preferably, the substrate is transparent for at least one wavelength range within the visible spectrum, preferably over the entire visible spectrum, i.e. between 400 nm and 700 nm and/or with the UV spectrum, preferably over the entire UV spectrum, i.e. between 100 nm and 400 nm. Preferably, the substrate exhibits a transmittance of at least 80 %, preferably at least 90 % and more preferably at least 95 % for at least one wavelength range within the visible spectrum, preferably over the entire visible spectrum, i.e. between 400 nm and 700 nm and/or within the UV spectrum, preferably over the entire UV spectrum, i.e. between 100 nm and 400 nm.

The data carriers manufactured by the present invention may be provided in thin sheets, which may be stacked on top of each other. For example, each data carrier may be a circular, disc-like, rectangular, or quadratic sheet, for example a sheet of 10 cm x 10 cm. Such sheets may be easily handled during encoding and decoding and may be stacked on top of each other with, e.g., 50 or even 500 sheets forming one stack.

Alternatively, the data carrier may be an elongated film, which may be wound up in a roll. For this purpose, it is particularly advantageous if the substrate (and preferably the entire data carrier) has a Young's modulus of at most 80 GPa, preferably of at most 75 GPa. It is further preferred that the data carrier does not break at a radius of curvature of 100 mm, preferably 50 mm and more preferably 25 mm, and more preferably 10 mm, and more preferably 5 mm. and more preferably 2.5 mm. In order to achieve these mechanical properties it is preferred to make the data carrier as thin as possible. Preferably, the thickness of the data carrier is at most 130 µm, more preferably at most 110 µm, even more preferably at most 100 µm, even more preferably at most 90 µm and most preferably at most 80 µm.

As discussed above, the recesses may have an arbitrary shape and may be elliptical, round, rectangular, square or the like. Different recesses of different shapes may be utilized to also encode information. However, in its most simple and straightforward approach, a plurality of essentially identical, substantially round recesses are generated by means of a laser beam, preferably using picosecond or femtosecond laser pulses. These recesses may be arranged in a regular pattern such as a rectangular, a square or a hexagonal pattern in order to encode digital information. Preferably, the diameter of said recesses is as small as possible, yet still sufficiently large that a proper decoding is possible. Preferably, each recess has a maximum extension perpendicular to its depth of at most 1 µm, preferably of at most 500 nm, more preferably of at most 300 nm, even more preferably of at most 200 nm and most preferably of at most 150 nm.

Preferably, the data carrier comprises at least 10 Megabytes of encoded information per cm² (per substrate surface), more preferably at least 100 Megabytes of encoded information per cm² and even more preferably at least 1 Gigabyte of information per cm².

The present invention relates to a method of manufacturing a data carrier according to the second aspect as described above. For manufacturing the data carrier according to the first aspect (not covered by the present invention), a ceramic substrate is provided and a plurality of recesses in either or both surfaces of the substrate are generated by means of laser ablation, preferably using picosecond or femtosecond laser pulses. For manufacturing a data carrier according to the second aspect, a ceramic substrate is provided, either or both surfaces of the substrate are coated with first and/or second coatings, and a plurality of recesses are generated in the first and/or second coatings by means of laser ablation, using picosecond or femtosecond laser pulses.

Laser ablation is achieved by using a pulsed laser, preferably a femtosecond laser. In order to achieve preferably cylindrical recesses, it is preferred to use a laser beam having a Gaussian or Bessel shape.

Coating either or both surfaces of the substrate with first and/or second coatings may be performed by various known techniques. The techniques employed by the present invention are physical vapor deposition or chemical vapor deposition.

As mentioned above, tempering enhances the bond between substrate and coating. Thus, the method comprises tempering the coated substrate at a temperature of at least 200 °C, preferably at least 500 °C and more preferably at least 1,000 °C.

The ceramic substrate may be treated on either or both surfaces of the substrate with one or more of the following techniques: heating, sputtering, HiPIMS (High Power Impulse Magnetron Sputtering), applying forming gas such as nitrogen and/or hydrogen. These techniques may improve the surface quality of the substrate and/or may lead to a stronger bond between the substrate and the coating(s).

The ceramic substrate is preferably transparent to the wavelength of the laser light used for laser ablation and laser ablation is preferably performed with laser light transmitted through the ceramic substrate. Thus, any debris generated during ablation cannot affect the optics used for ablation because the data carrier forms a barrier between the ablated material and the optics.

The present disclosure further relates to a method of reading out a data carrier as described above, said method not being covered by the claimed invention. According to the method, the data carrier of the first or second aspect is illuminated with light of a first wavelength. Light transmitted through the data carrier and/or reflected by the data carrier is detected and analyzing in order to decode the information encoded in the recesses of the data carrier. For example, light passing through the recesses (in the substrate in case of the first aspect or in the coating in case of the second aspect) and light being blocked at the data carrier wherever no recess is present (by, e.g., the intransparent substrate or the intransparent coating) may in combination generate a pattern (bright/dark) such as a OR code which may then be decoded using well-known techniques.

Preferably, the data carrier comprises a ceramic substrate and a coating with laser-ablated recesses on one surface of the ceramic substrate, wherein the ceramic substrate is transparent to the first wavelength and wherein light transmitted through the ceramic substrate is detected. This may happen both in transmission and reflection mode. In particular, the data carrier may preferably be illuminated through the ceramic substrate from the side opposite to the coating. Moreover, light originating from the recesses may also be detected through the ceramic substrate from the side opposite to the coating. This technique improves the signal-to-noise ratio because the side opposite to the coating with the recesses is typically cleaner and/or has a smoother surface facilitating imaging. With dust particles possibly being present on the side comprising the recesses it is particularly advantageous to illuminate from and detect on the opposite side with the illumination and/or detection focus being located at the bottom of the recesses in order to achieve a minimum effect from the dust (or other impurities) onto the optical beam.

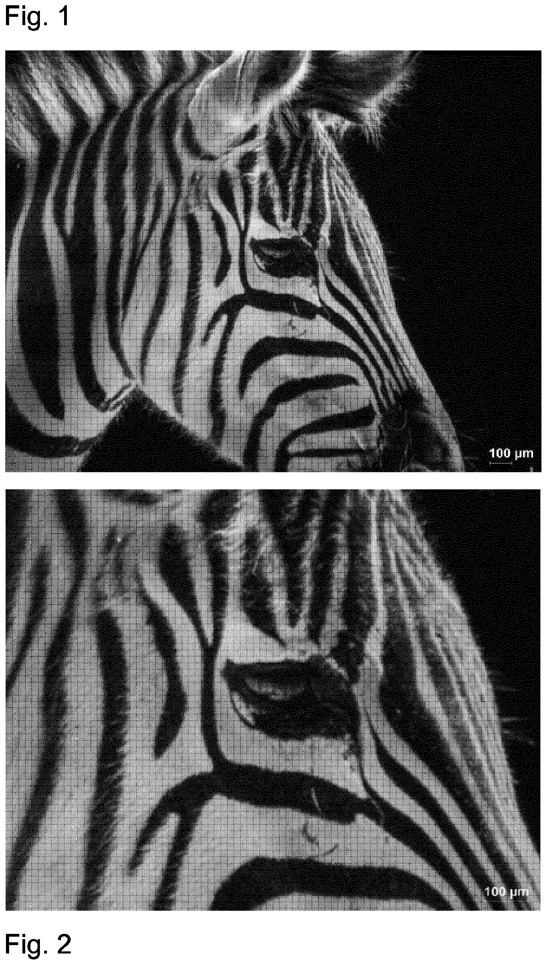

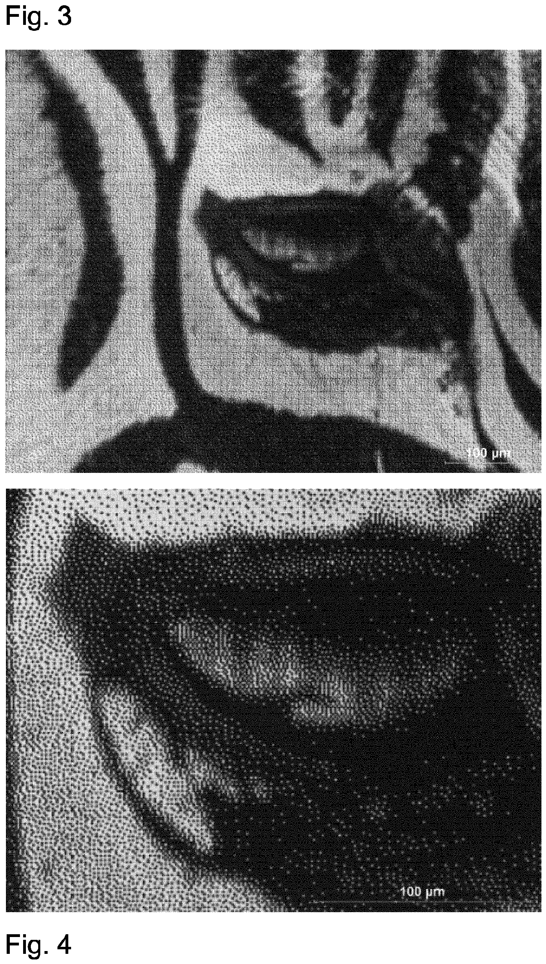

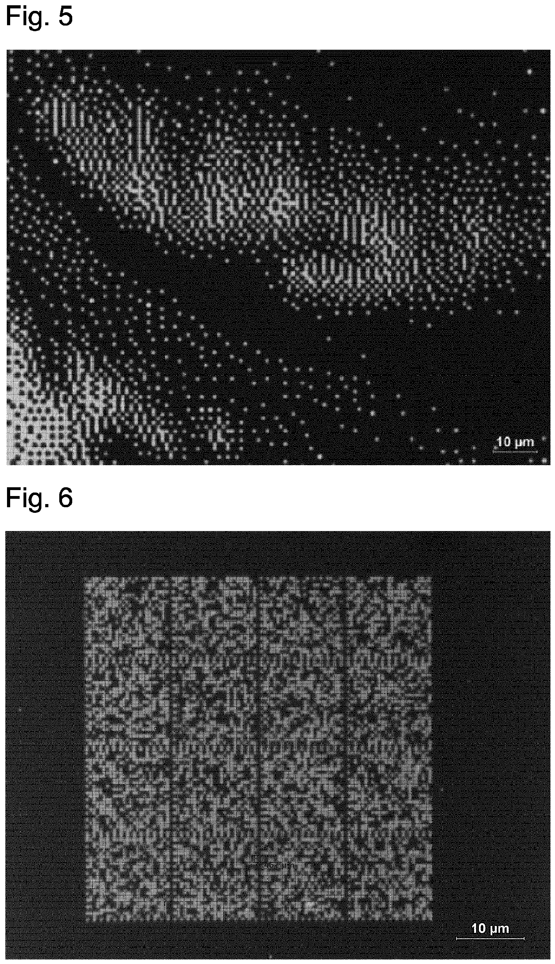

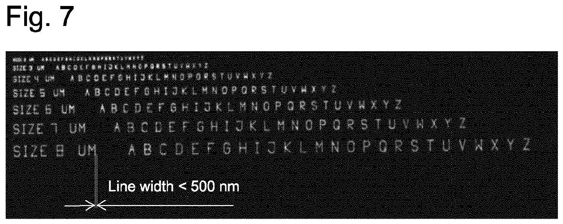

An example of the present disclosure is subsequently described with reference to the Figures, which show:
∘ Figure 1 a transmission microscopy image of an exemplary data carrier at a magnification of 5x;
∘ Figure 2 a transmission microscopy image of the data carrier of Figure 1 at a magnification of 10x;
∘ Figure 3 a transmission microscopy image of the data carrier of Figure 1 at a magnification of 20x;
∘ Figure 4 a transmission microscopy image of the data carrier of Figure 1 at a magnification of 50x;
∘ Figure 5 a transmission microscopy image of the data carrier of Figure 1 at a magnification of 100x;
∘ Figure 6 a transmission microscopy image of another exemplary data carrier inscribed with information encoded digitally; and
∘ Figure 7 a transmission microscopy image of another exemplary data carrier inscribed with alphabetic characters in single-line font of 2-8 µm height.

For the examples, a ceramic substrate having a size of 10 mm x 10 mm and consisting of 100 µm thick sapphire substrate (Al₂O₃) was coated with a coating of CrN having a thickness of 100 nm by means of physical vapor deposition (PVD). Circular recesses having a diameter of about 1 µm (Example 1) and approximately 500 nm (Examples 2 and 3) were ablated from the coating using a 200 femtosecond laser at a wavelength of 515 nm.

The resulting data carrier of Example 1 was imaged with an Olympus BX-51 at various magnifications. The respective transmission microscopy images at magnifications of 5x, 10x, 20x, 50x and 100x are shown in Figures 1-5, respectively.

As is evident from these Figures, it is possible to reliably and irreversibly create recesses in the coating so as to achieve a superb optical contrast between the material of the ceramic substrate (which is transparent) and the material of the coating layer (which is light absorbing). While the recesses of this Example 1 encode analogue information, namely the photograph of the zebra, it is similarly possible to use the various recesses to encode digital information (recess present versus recess not present) as depicted in Fig. 6 (Example 2) or alphanumeric characters as displayed in Fig. 7 (Example 3). In Example 2, individual "pixels" are smaller than 500 nm in width. In Example 3, the line width of the characters is approximately 500 nm.

The coating and ablation techniques illustrated above with reference to the examples may be analogously employed with a ceramic substrate having a thickness of at most 200 µm. For example, the same coating may be applied onto the so-called glass-ribbon (reference number 2010-03E) available from Nippon Electric Glass. Said glass-ribbon is available in thicknesses between 4 µm and 50 µm and lengths of up to 100 m. Similarly, Alumina Ribbon Ceramic or Ribbon ceramic made from zirconia (both with a thickness as low as 20 µm), available from Corning, may be employed. Other suitable and particularly preferred materials are: AGC Spool, AGC Dragontrail, Corning^{®} Willow^{®} Glass, Corning Standard Glass Carriers SGC 3.4, SGC 7.8 and SGC 9.0, Nippon Electric Glass - G-Leaf (Ultra-thin Glass), SCHOTT AS 87 eco, SCHOTT AF 32 Eco, and SCHOTT Xensation^{®} Flex.

## Claims

1. A method of manufacturing a data carrier, the data carrier comprising a ceramic substrate having first and second opposite surfaces and a thickness of at most 500 µm, wherein the first surface of the substrate is coated with a first coating, the material of the first coating being different from the material of the ceramic substrate, wherein the first coating comprises a plurality of laser-ablated recesses encoding information; wherein the method comprises the following steps:
providing a ceramic substrate;
coating the first surface of the substrate with a first coating by physical vapor deposition or chemical vapor deposition; and
generating a plurality of recesses in the first coating by means of laser ablation, wherein the laser-ablated recesses are generated by a picosecond or a femtosecond pulse laser;
wherein the data carrier is tempered after the coating process at a temperature of at least 200°C to achieve a sintered interface between the substrate and the first coating to enhance the bond between the substrate and the first coating.

2. The method of claim 1, wherein the thickness of the first coating is at most 10 µm, preferably at most 1 µm, more preferably at most 100 nm, even more preferably at most 50 nm.

3. The method of any of the preceding claims, wherein each recess in the first coating has a depth of at most 10 µm, preferably at most 1 µm, more preferably at most 100 nm, even more preferably at most 50 nm.

4. The method of any of the preceding claims, wherein each recess in the first coating has a depth which is smaller than the thickness of the respective coating; or wherein each recess in the first coating has a depth which is substantially equal to the thickness of the respective coating; or wherein each recess in the first coating has a depth which is greater than the thickness of the respective coating.

5. The method of claim 4, wherein each recess extends into the substrate with a depth of at most 1 µm, preferably of at most 100 nm, more preferably of at most 50 nm.

6. The method of any of the preceding claims, wherein the first coating comprises one or a combination of the following materials: a metal; a metal nitride; a metal carbide; a metal oxide; a metal boride; or a metal silicide.

7. The method of any of the preceding claims, wherein the ceramic substrate is transparent to the wavelength of the laser light used for laser ablation and wherein laser ablation is performed with laser light transmitted through the ceramic substrate.

## Patentansprüche

1. Verfahren zum Herstellen eines Datenträgers, wobei der Datenträger ein keramisches Substrat mit ersten und zweiten gegenüberliegenden Oberflächen und einer Dicke von höchstens 500 µm aufweist, wobei die erste Oberfläche des Substrats mit einer ersten Beschichtung beschichtet ist, wobei sich das Material der ersten Beschichtung von dem Material des keramischen Substrats unterscheidet, wobei die erste Beschichtung mehrere laserablatierte Vertiefungen aufweist, die Informationen codieren; wobei das Verfahren die folgenden Schritte aufweist:
Bereitstellen eines keramischen Substrats;
Beschichten der ersten Oberfläche des Substrats mit einer ersten Beschichtung durch physikalische Gasphasenabscheidung oder chemische Gasphasenabscheidung; und
Erzeugen von mehreren Vertiefungen in der ersten Beschichtung mittels Laserablation, wobei die laserablatierten Vertiefungen durch einen gepulsten Pikosekunden- oder Femtosekunden-Laser erzeugt werden;
wobei der Datenträger nach dem Beschichtungsprozess bei einer Temperatur von mindestens 200°C getempert wird, um eine gesinterte Grenzfläche zwischen dem Substrat und der ersten Beschichtung zu erreichen, um die Verbindung zwischen dem Substrat und der ersten Beschichtung zu verbessern.

2. Verfahren nach Anspruch 1, wobei die Dicke der ersten Beschichtung höchstens 10 µm, vorzugsweise höchstens 1 µm, besonders bevorzugt höchstens 100 nm, ganz besonders bevorzugt höchstens 50 nm beträgt.

3. Verfahren nach einem der vorhergehenden Ansprüche, wobei jede Vertiefung in der ersten Beschichtung eine Tiefe von höchstens 10 µm, vorzugsweise höchstens 1 µm, besonders bevorzugt von höchstens 100 nm, ganz besonders bevorzugt von höchstens 50 nm aufweist.

4. Verfahren nach einem der vorhergehenden Ansprüche, wobei jede Vertiefung in der ersten Beschichtung eine Tiefe aufweist, die kleiner ist als die Dicke der jeweiligen Beschichtung; oder wobei jede Vertiefung in der ersten Beschichtung eine Tiefe aufweist, die im Wesentlichen gleich der Dicke der jeweiligen Beschichtung ist; oder wobei jede Vertiefung in der ersten Beschichtung eine Tiefe aufweist, die größer ist als die Dicke der jeweiligen Beschichtung.

5. Verfahren nach Anspruch 4, wobei sich jede Vertiefung mit einer Tiefe von höchstens 1 µm, vorzugsweise von höchstens 100 nm, besonders bevorzugt von höchstens 50 nm, in das Substrat erstreckt.

6. Verfahren nach einem der vorhergehenden Ansprüche, wobei die erste Beschichtung eines oder eine Kombination der folgenden Materialien aufweist: ein Metall; ein Metallnitrid; ein Metallkarbid; ein Metalloxid; ein Metallborid; oder ein Metallsilizid.

7. Verfahren nach einem der vorhergehenden Ansprüche, wobei das keramische Substrat für die Wellenlänge des für die Laserablation verwendeten Laserlichts transparent ist und wobei die Laserablation mit durch das keramische Substrat transmittiertem Laserlicht durchgeführt wird.

## Revendications

1. Procédé de fabrication d'un support de données, ledit support de données comprenant un substrat céramique ayant une première et une deuxième surfaces opposées et une épaisseur d'au plus 500 µm, où la première surface du substrat est recouverte d'un premier revêtement, le matériau du premier revêtement étant différent du matériau du substrat céramique, où le premier revêtement comprend une pluralité d'évidements formés par ablation laser codant des informations ; ledit procédé comprenant les étapes suivantes :
préparation d'un substrat céramique ;
couverture de la première surface du substrat avec un premier revêtement par dépôt physique en phase vapeur ou par dépôt chimique en phase vapeur ; et
génération d'une pluralité d'évidements dans le premier revêtement au moyen d'une ablation laser, les évidements générés par ablation laser étant produits par un laser à impulsions picoseconde ou femtoseconde ;
où le support de données est trempé après processus de revêtement, à une température d'au moins 200°C pour obtenir une interface frittée entre le substrat et le premier revêtement afin d'améliorer la liaison entre le substrat et le premier revêtement.

2. Procédé selon la revendication 1, où l'épaisseur du premier revêtement est de 10 µm au maximum, avantageusement de 1 µm au maximum, de préférence de 100 nm au maximum, et tout particulièrement de 50 nm au maximum.

3. Procédé selon l'une des revendications précédentes, où chaque évidement dans le premier revêtement a une profondeur de 10 µm au maximum, avantageusement de 1 µm au maximum, de préférence de 100 nm au maximum, et tout particulièrement de 50 nm au maximum.

4. Procédé selon l'une des revendications précédentes, où chaque évidement dans le premier revêtement a une profondeur inférieure à l'épaisseur du revêtement respectif ; ou où chaque évidement dans le premier revêtement a une profondeur sensiblement égale à l'épaisseur du revêtement respectif ; ou où chaque évidement dans le premier revêtement a une profondeur supérieure à l'épaisseur du revêtement respectif.

5. Procédé selon la revendication 4, où chaque évidement s'étend dans le substrat avec une profondeur de 1 µm au maximum, avantageusement de 100 nm au maximum, de préférence de 50 nm au maximum.

6. Procédé selon l'une des revendications précédentes, où le premier revêtement comprend un des matériaux suivants, ou une combinaison de ceux-ci : un métal ; un nitrure métallique ; un carbure métallique ; un oxyde métallique ; un borure métallique ; ou un siliciure métallique.

7. Procédé selon l'une des revendications précédentes, où le substrat céramique est transparent à la longueur d'onde de la lumière laser utilisée pour l'ablation laser et où l'ablation laser est réalisée avec une lumière laser transmise au travers du substrat céramique.
